# FASCICULE DE BREVET EUROPEEN

(11) **EP 3 277 746 B1**
(45) Date de publication et mention de la délivrance du brevet: **19.02.2020**
(21) Numéro de dépôt: 16714829.5
(22) Date de dépôt: 29.03.2016
(51) Int. Cl.: C08J 5/24, C09D 171/00, C09D 171/02, C08L 71/02, D06M 15/53, D06M 23/00, D06M 13/17

(54) **BAIN D'IMPRÉGNATION AQUEUX POUR FIBRES DE RENFORT ET SES APPLICATIONS**
WÄSSRIGE IMPRÄGNIERFLOTTE FUR VERSTÄRKUNGSFASERN UND IHRE ANWENDUNGEN
AQUEOUS IMPREGNATION BATH FOR REINFORCEMENT FIBERS AND APPLICATIONS THEREOF

(30) Priorité: 31.03.2015 FR 1552741
(43) Date de publication de la demande: 07.02.2018
(73) Titulaire: ArianeGroup SAS, 75015 Paris (FR)
(72) Inventeur: KRZEMINSKI, Mickaël, 33240 Cubzac-les-Ponts (FR); DEFOORT, Brigitte, 33160 Saint-Médard-en-Jalles (FR); FRISARI, Maeliss, 38170 Seyssinet-Pariset (FR); FLOUREZ, Amandine, 24000 Périgueux (FR)
(74) Mandataire: Brevalex
(86) Numéro de dépôt international: PCT/EP2016/056814
(87) Numéro de publication internationale: WO 2016/156325

(56) Documents cités:
- WO-A1-93/01045
- WO-A1-2010/136720
- JP-A- 2014 159 650
- US-A- 5 888 580

## Description

### DOMAINE TECHNIQUE

L'invention se rapporte au domaine de la fabrication de pré-imprégnés à matrice thermoplastique.

Plus spécifiquement, elle se rapporte à un bain d'imprégnation aqueux pour fibres de renfort qui permet de fabriquer des pré-imprégnés à matrice thermoplastique conduisant à une consolidation très satisfaisante, en termes de porosité résiduelle, des pièces en matériaux composites fabriquées à partir de ces pré-imprégnés.

Elle se rapporte également à un procédé d'imprégnation de fibres de renfort utilisant ce bain d'imprégnation ainsi qu'à un procédé de fabrication d'un pré-imprégné à matrice thermoplastique mettant en oeuvre ce procédé d'imprégnation.

Elle se rapporte en outre à un procédé de fabrication d'une pièce en un matériau composite à matrice thermoplastique mettant en oeuvre le procédé de fabrication d'un pré-imprégné.

L'invention trouve, en premier lieu application dans les industries aéronautique et spatiale, notamment pour la fabrication de pièces de structure de grandes dimensions.

Toutefois, elle peut également applications dans d'autres domaines dans lesquels sont fabriquées des pièces en matériaux composites comme les industries ferroviaire, navale et automobile, l'industrie de l'armement, par exemple pour la fabrication de missiles ou de tubes lance-missiles, ou encore dans le domaine des loisirs et des sports, par exemple pour la fabrication d'articles destinés aux sports nautiques et aux sports de glisse.

### ÉTAT DE LA TECHNIQUE ANTÉRIEURE

Les pièces en matériaux composites à matrice thermoplastique renforcée par des fibres - dites « fibres de renfort » ou « fibres de renforcement » - unidirectionnelles (en verre, carbone, aramide, bore, etc) sont fabriquées à partir de semi-produits appelés « pré-imprégnés » ou « prépregs ».

La fabrication d'un pré-imprégné, qui consiste à enrober les fibres de renfort par la matrice thermoplastique, peut être réalisée par différents procédés, selon la façon dont le matériau de la matrice est mis en oeuvre ; on connaît par exemple :
- le procédé par fusion du polymère thermoplastique destiné à former la matrice (ou procédé « hot melt » en anglais), consistant à manipuler ce polymère à l'état fondu ;
- le procédé par voie solvant, qui consiste à dissoudre le polymère thermoplastique destiné à former la matrice dans un solvant adapté, typiquement organique et dont le choix dépend généralement de la nature chimique du polymère ; le solvant doit être éliminé durant le processus d'imprégnation ; et
- le procédé par dispersion, où le polymère thermoplastique destiné à former la matrice thermoplastique est dispersé sous la forme d'une poudre dans un solvant ; là également, le solvant doit être éliminé durant le processus d'imprégnation.

De façon plus précise, le procédé par dispersion consiste :
- à faire circuler les fibres de renfort dans un bain d'imprégnation comprenant le polymère thermoplastique dispersé dans le solvant ; puis
- une fois les fibres ainsi imprégnées sorties du bain d'imprégnation, à éliminer le solvant par séchage des fibres ;
- à chauffer les fibres ainsi imprégnées et séchées à une température supérieure à la température de fusion du polymère pour favoriser l'adhérence de ce polymère sur les fibres et conférer une cohésion au matériau ; et
- à calandrer les fibres ainsi enrobées de polymère pour donner au pré-imprégné la forme et les dimensions souhaitées.

Un exemple de mise en œuvre de ce procédé est décrit dans le brevet US n° 5,888,580, ci-après référence **[1]**, et dans la demande internationale PCT WO 93/01045, ci-après référence **[2].**

Pour des raisons environnementales mais aussi d'hygiène et de sécurité, le solvant, qui est utilisé pour le bain d'imprégnation, est de préférence de l'eau. Compte-tenu de la nature hydrophobe de la plupart des polymères thermoplastiques, il est nécessaire d'ajouter dans le bain d'imprégnation des agents tensioactifs (ou surfactants), généralement en faible quantité, dont le rôle est de stabiliser la dispersion du polymère thermoplastique en phase aqueuse.

Il est bien connu que les agents tensioactifs sont des molécules qui modifient la tension superficielle entre deux surfaces. Ces molécules, généralement organiques, ont un caractère amphiphile, c'est à dire qu'elles comportent deux parties de polarité différentes : une partie apolaire (c'est-à-dire lipophile) et une partie polaire (c'est-à-dire hydrophile). On utilise la notion de balance hydrophile/lipophile (HLB) caractériser le caractère plus ou moins hydrophile d'un tensioactif.

En pratique, les agents tensioactifs sont donc capables de faire le lien entre des matériaux polaire et apolaire et sont utilisés - souvent une faible quantité est suffisante - pour stabiliser des dispersions, des émulsions, etc.

Un agent tensioactif de référence dans le domaine de l'imprégnation de fibres de renfort en bain aqueux - et qui est d'ailleurs celui qui est utilisé dans les références **[1]** et **[2]** précitées - est l'alcool cétéarylique éthoxylé 25 fois, de formule HO-(CH₂-CH₂-O)₂₅-CH₂-(CH₂)ₘ-CH₃ (avec m = 15-17), qui est commercialisé par la société BASF sous la référence commerciale Cremophor™ A 25.

L'agent tensioactif qui est utilisé pour stabiliser un bain d'imprégnation aqueux pour fibres de renfort va se déposer sur les fibres lors du processus d'imprégnation et va donc subir ensuite les traitements que subissent les fibres : séchage, chauffage à la température de fusion de la matrice, calandrage. On peut donc s'attendre à ce que cet agent tensioactif soit également présent, éventuellement sous forme dégradée, dans le pré-imprégné et dans les pièces en matériau composite réalisées avec ce pré-imprégné.

La fabrication de pièces en matériaux composites à partir de pré-imprégnés à matrice thermoplastique peut être réalisée par différents procédés.

Toutefois, d'une façon générale, cette fabrication comprend une étape de préparation d'une préforme, par exemple par placement de fibres ou par drapage, suivie d'une étape dite de « consolidation », parfois de mise en forme, qui consiste à chauffer la préforme sous pression de sorte à obtenir, par fluage de la matrice polymère fondue, un matériau composite ayant une porosité résiduelle la plus faible possible. C'est cette étape de consolidation qui permet d'obtenir des matériaux ayant la qualité requise en construction aéronautique et spatiale, c'est-à-dire des matériaux ayant les propriétés mécaniques les plus élevées possibles

La consolidation peut être effectuée sous presse pour de petites pièces, c'est-à-dire de surface maximale de l'ordre du m².

Pour des pièces plus grandes, elle se fait en autoclave, c'est à dire dans une enceinte capable de simultanément chauffer et mettre sous pression les pièces à consolider. La pression utilisée est généralement supérieure à 7 bars et typiquement de 10 bars, la température dépendant, elle, de la nature du polymère thermoplastique mais devant, en tout état de cause, être supérieure à sa température de fusion. Le plus souvent, avant d'être consolidées en autoclave, les pièces subissent une opération de mise sous vessie, c'est à dire qu'elles sont recouvertes d'un film étanche ; on peut ainsi pratiquer une mise sous vide du matériau, sous la vessie, pendant la consolidation en autoclave.

La consolidation en autoclave est une opération coûteuse, et ce, d'autant plus que les pièces à consolider sont grandes, en particulier parce que la construction et l'utilisation d'autoclaves de grandes dimensions coûtent cher. En effet, les autoclaves de grandes dimensions doivent présenter une enveloppe épaisse et lourde pour résister à des conditions de pression et de température élevées et leur utilisation pour consolider des pièces nécessite l'usage de grandes quantités de gaz.

Il serait donc souhaitable, notamment pour des raisons de coûts mais également de faisabilité, de pouvoir réaliser des consolidations de pièces qui conduisent à des matériaux composites ayant la qualité requise en construction aéronautique et spatiale, et ce, sans utiliser d'autoclave ou, si un autoclave est utilisé, dans des conditions de pression les plus faibles possibles.

Or, l'expérience montre que les pièces en matériaux composites, qui sont fabriquées à partir de pré-imprégnés à matrice thermoplastique ayant été réalisés par imprégnation de fibres de renfort en bain aqueux du type décrit précédemment présentent en général, lorsqu'elles sont consolidées à des pressions notablement plus basses que celles classiquement utilisées en autoclave, des propriétés mécaniques dégradées, associées à un taux de porosité élevé. Elles sont de ce fait considérées comme défectueuses et non utilisables pour des applications aéronautiques ou spatiales.

Les Inventeurs se sont donc fixés pour but de remédier à ce problème.

Or, dans le cadre de leurs travaux, les Inventeurs ont constaté qu'en choisissant judicieusement l'agent tensioactif servant à stabiliser les polymères thermoplastiques lorsqu'ils sont dispersés dans des bains d'imprégnation aqueux pour fibres de renfort, il est possible d'obtenir des pré-imprégnés qui conduisent à une consolidation très satisfaisante, en termes de porosité résiduelle, des pièces en matériaux composites fabriquées à partir de ces pré-imprégnés, et ce, après une étape de consolidation sans mise sous pression en autoclave et faisant appel à une pression extérieure d'au plus 5 bars.

Et c'est sur cette constatation qu'est basée la présente invention.

### EXPOSÉ DE L'INVENTION

L'invention a donc, en premier lieu, pour objet un bain d'imprégnation pour fibres de renfort, qui comprend au moins un polymère thermoplastique, un agent tensioactif et de l'eau, et qui caractérisé en ce que l'agent tensioactif est un alcool stéarylique éthoxylé 100 fois, c'est-à-dire un alcool stéarylique éthoxylé qui répond à la formule : HO-(CH₂-CH₂-O)ₙ-CH₂-(CH₂)₁₆-CH₃ dans laquelle n vaut 100.

Cet alcool stéarylique éthoxylé, aussi appelé éther stéarylique de polyoxyéthylène (100), est notamment disponible auprès des sociétés CRODA et SIGMA-ADRICH sous la référence commerciale Brij™ S100.

Conformément à l'invention, l'agent tensioactif est, de préférence, présent dans le bain d'imprégnation dans une proportion massique allant de 0,25% à 5% et, mieux encore, de 0,50% à 1,5% par rapport au polymère thermoplastique, ce dernier étant, lui-même, typiquement présent dans ce bain dans une proportion massique allant de 10% à 50% et, mieux encore, de 25% à 35% par rapport à l'eau, en fonction de la stabilité de la dispersion, de la vitesse de production du pré-imprégné et du taux massique de fibres.

Le polymère thermoplastique peut être choisi parmi tous les polymères thermoplastiques susceptibles d'être utilisés pour la fabrication de pièces en matériaux composites. Ainsi, il peut notamment être une polyaryléthercétone (ou PAEK) telle qu'une polyéthercétone (ou PEK), une polyétheréthercétone (ou PEEK) ou une polyéther-cétonecétone (ou PEKK), une polyéthylèneimine (ou PEthl), un polyétherimide (ou PEI), un polyimide (ou PI), une polyoléfine telle qu'un polyéthylène, notamment de haute densité, un polypropylène ou un copolymère d'éthylène et de polypropylène, un polyamide tel qu'un polyamide 6 (ou PA-6), un polyamide 1.1 (ou PA-1.1), un polyamide 12 (ou PA-12), un polyamide 6.6 (ou PA-6.6), un polyamide 4.6 (ou PA-4.6), un polyamide 6.10 (ou PA-6.10), un polyamide 6.12 (ou PA-6.12) ou un polyamide aromatique, en particulier un polyphtalamide ou un aramide, un polyuréthanne thermoplastique (ou TPU), un poly(sulfure de phénylène) (ou PPS), un poly(téréphtalate d'éthylène) (ou PET) ou un poly(téréphtalate de butylène) (ou PBT), une polysulfone tel qu'une polysulfone proprement dite (ou PSU), une polyéthersulfone (ou PES) ou une polyphénylsulfone (ou PPSU), un polycarbonate, un poly(chlorure de vinyle) ou encore un poly(alcool vinylique).

De préférence, le polymère thermoplastique est choisi parmi les polyétheréthercétones et, plus spécifiquement, parmi les polyétheréthercétones classiquement utilisées dans des applications aéronautiques et spatiales telles que celles commercialisées par la société VICTREX sous les références commerciales PEEK 90P, PEEK 150P et PEEK 450P, ou celles commercialisées par la société EVONIK sous les références Vestakeep™ ou encore celle commercialisée par la société SOLVAY PLASTICS sous la référence commerciale KetaSpire™.

De préférence encore, le polymère thermoplastique est présent dans le bain d'imprégnation sous une forme micronisée, c'est-à-dire sous la forme de particules dont le diamètre médian (D50) en nombre est d'au plus 50 micromètres.

L'invention a également pour objet un procédé d'imprégnation de fibres de renfort, qui comprend l'immersion des fibres de renfort dans un bain d'imprégnation et qui est caractérisé en ce que le bain d'imprégnation est tel que défini précédemment.

Conformément à l'invention, les fibres de renfort peuvent être choisies parmi toutes les fibres susceptibles d'être utilisées comme renfort dans la fabrication de pièces en matériaux composites. Ainsi, il peut notamment s'agir de fibres de verre, de fibres de quartz, de fibres de carbone, de fibres de graphite, de fibres de silice, de fibres métalliques comme des fibres d'acier, des fibres d'aluminium ou des fibres de bore, de fibres céramiques comme des fibres de carbure de silicium ou de carbure de bore, de fibres organiques de synthèse comme des fibres d'aramide, des fibres de polyéthylène, des fibres de polyester ou des fibres de poly(p-phénylène benzobisoxazole), plus connues sous le sigle PBO, de fibres organiques naturelles comme des fibres de chanvre, des fibres de lin ou des fibres de soie.

Par ailleurs, ces fibres se présentent, de préférence, sous la forme de fils regroupant plusieurs milliers de filaments élémentaires (typiquement de 3 000 à 48 000) mesurant, par exemple, 6 à 10 µm de diamètre dans le cas de fibres de carbone. Ces fibres sont connues sous les dénominations anglaises « *rovings* » ou « *tapes ».*

Dans un mode de réalisation préféré du procédé, les fibres de renfort sont des fibres de carbone, auquel cas on utilise un taux massique de fibres de renfort allant de 35% à 75% et, mieux encore, de 57% à 72% rapporté à la masse totale des fibres de rapport et du polymère thermoplastique.

Dans un autre mode préféré du procédé, les fibres de renfort sont des fibres de verre ou de silice, auquel cas on utilise un taux massique de fibres de renfort allant de 45% à 82% et, mieux encore, de 66% à 78% rapporté à la masse totale des fibres de renfort et du polymère thermoplastique.

L'imprégnation des fibres de renfort peut notamment être réalisée - comme connu en soi - par circulation et guidage de ces fibres dans un récipient du type bac ou cuve, préalablement rempli du bain d'imprégnation et auquel sont associés, d'une part, un système d'agitation permettant de maintenir ce bain homogène et, d'autre part, des moyens d'entraînement permettant d'assurer la circulation et le guidage des fibres de renfort.

L'invention a encore pour objet un procédé de fabrication d'un pré-imprégné à matrice thermoplastique, qui est caractérisé en ce qu'il comprend une étape d'imprégnation de fibres de renfort par un procédé tel que défini précédemment.

Avantageusement, ce procédé comprend, après l'étape d'immersion des fibres de renfort dans le bain d'imprégnation, une étape de séchage des fibres de renfort, une étape de chauffage des fibres de renfort à une température supérieure à la température de fusion du polymère thermoplastique et une étape de calandrage des fibres de renfort ainsi enrobées de polymère thermoplastique, les modalités de mise en œuvre de ces étapes de séchage, chauffage et calandrage étant bien connues de l'état de la technique et, notamment, des références [1] et [2].

L'invention a en outre pour objet un procédé de fabrication d'une pièce en un matériau composite à matrice thermoplastique, qui est caractérisé en ce qu'il comprend une étape de fabrication d'un pré-imprégné par un procédé tel que défini précédemment.

Comme connu dans l'état de la technique, ce procédé de fabrication peut comprendre de plus la réalisation d'une préforme à partir du pré-imprégné et la consolidation de cette préforme, cette consolidation étant préférentiellement réalisée, conformément à l'invention, à une pression inférieure ou égale à 5 bars et, mieux encore, sans mise sous pression.

D'autres caractéristiques et avantages de l'invention apparaîtront mieux à la lecture du complément de description qui suit, qui se rapporte à des essais expérimentaux ayant permis de valider cette invention et qui est donné en référence aux figures annexées.

Bien entendu, ce complément de description n'est donné qu'à titre d'illustration de l'objet de l'invention et ne constitue en aucun cas une limitation de cet objet.

### BRÈVE DESCRIPTION DES FIGURES

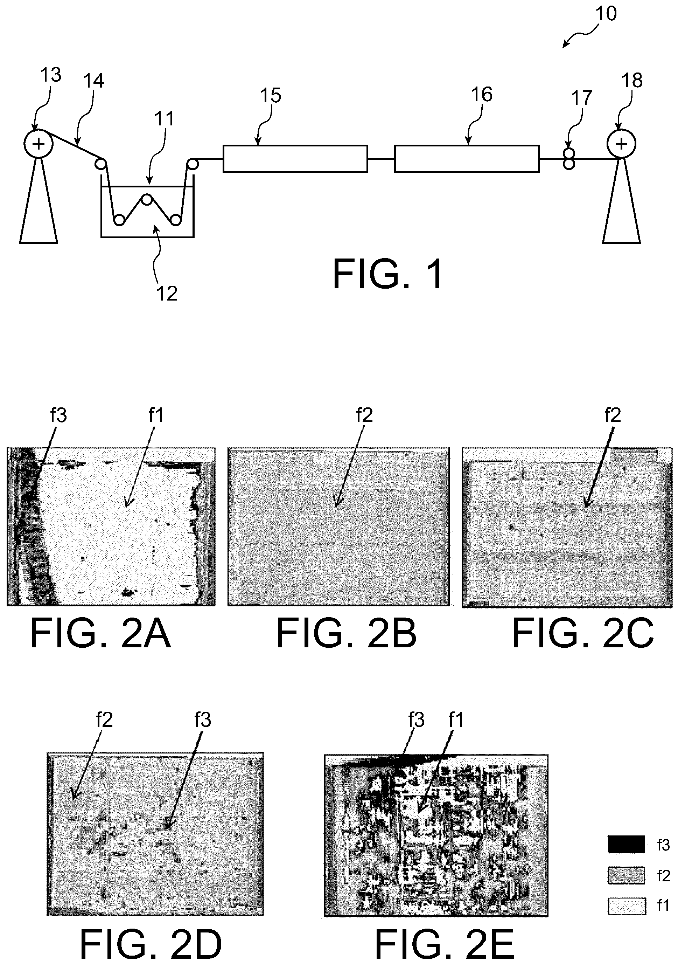

La figure 1 est un schéma illustrant le dispositif de formation en continu de pré-imprégnés ayant été utilisé pour réaliser des pré-imprégnés dans le cadre d'essais expérimentaux visant à valider l'invention.
Les figures 2A à 2E illustrent les cartographies obtenues par contrôle non destructif aux ultrasons de composites, tous préparés dans les mêmes conditions expérimentales mais à partir de pré-imprégnés ayant été, eux, préparés par imprégnation dans des bains d'imprégnation différents ; ainsi, la figure 2A correspond à un composite obtenu à partir d'un pré-imprégné préparé conformément à l'état de la technique ; les figures 2B et 2C correspondent à deux composites obtenus à partir de pré-imprégnés préparés conformément à l'invention tandis que les figures 2D et 2E correspondent à deux composites obtenus à partir de pré-imprégnés servant d'exemples comparatifs.

### EXPOSÉ DÉTAILLÉ DE MODES DE RÉALISATION PARTICULIERS

L'invention a été validée en réalisant des essais expérimentaux consistant :
- à préparer une série de lots de pré-imprégnés par imprégnation de mèches de fibres de carbone (fibres HexTow™ IM7 - HEXCEL) dans des bains d'imprégnation aqueux comprenant une polyétheréthercétone (PEEK 150P - VICTREX) dispersée sous une forme micronisée ainsi qu'un agent tensioactif mais en changeant, d'un lot de pré-imprégnés à l'autre, l'agent tensioactif, la proportion massique de cet agent par rapport au PEEK ou le taux massique de fibres ;
- à soumettre des préformes préparées par drapage manuel de ces pré-imprégnés à une opération de consolidation en étuve ; et
- à apprécier la santé matière (c'est-à-dire la qualité de consolidation) des matériaux ainsi obtenus par un contrôle non destructif (CND) aux ultrasons.

### Préparation des lots de pré-imprégnés :

On prépare 5 lots de pré-imprégnés, dénommés L1 à L5, au moyen du dispositif 10 illustré schématiquement sur la figure 1, qui permet de former en continu des pré-imprégnés, sous la forme de bandes calibrées, à partir de mèches de fibres de renfort.

Comme visible sur cette figure, ce dispositif (qui est connu en soi) comprend :
- un bac 11 rempli d'un bain d'imprégnation 12 ;
- une bobine 13 qui est située en amont (dans le sens de circulation des mèches de fibres de renfort dans le dispositif 10) du bac 11 et sur laquelle sont enroulées les mèches de fibres de renfort 14 avant leur introduction dans le bain d'imprégnation ;
- un four infrarouge 15 qui est situé en aval du bac 11 et qui permet de sécher les mèches de fibres de renfort à leur sortie du bain d'imprégnation ;
- une série de fours à air chaud 16 qui est située en aval du four 15 et qui permet de faire fondre le polymère imprégnant les mèches de fibres de renfort et de consolider ces mèches ;
- un dispositif de calandrage 17 qui est situé en aval de la série de fours 16 et qui permet de donner aux mèches de fibres de renfort la forme et les dimensions souhaitées ;
- une bobine 18 qui est situé en aval du dispositif de calandrage 17 et sur laquelle sont enroulées les mèches de fibres de renfort à leur sortie de ce dispositif de calandrage ; et
- un système d'entraînement synchrone (non représenté sur la figure 1) assurant la circulation des mèches de fibres de renfort depuis la bobine 13 jusqu'à la bobine 17.

La composition des bains d'imprégnation ainsi que les taux massiques de fibres ayant été utilisés pour les lots L1 à L5 sont précisés ci-après.
L1 : selon l'enseignement des références **[1]** et **[2]**
   PEEK 150P : 1 kg
   Eau : 2 kg par kg de polymère
   Agent tensioactif : alcool cétéarylique éthoxylé 25 fois (Cremophor™ A 25 -BASF) - 1,5% (m/m) du polymère
   Taux massique de fibres : 59%
L2 :
   PEEK 150P : 1 kg
   Eau : 2 kg par kg de polymère
   Agent tensioactif : alcool stéarylique éthoxylé 100 fois (Brij™ S100 - CRODA) - 1,0% (m/m) du polymère
   Taux massique de fibres : 62%
L3 :
   Bain d'imprégnation de composition identique à celui utilisé pour le lot L2
   Taux massique de fibres : 59%
L4 :
   PEEK 150P : 1 kg
   Eau : 2 kg par kg de polymère
   Agent tensioactif : alcool stéarylique éthoxylé 20 fois (Brij™ S20 - CRODA) - 1,5% (m/m) du polymère
   Taux massique de fibres : 59%
L5 :
   PEEK 150P : 1 kg
   Eau : 2 kg par kg de polymère
   Agent tensioactif : monolaurate de sorbitane polyoxoéthylène (Polysorbate 20 - SIGMA-ALDRICH) - 2,0 % (m/m) du polymère
   Taux massique de fibres : 62%

Les bains d'imprégnation sont maintenus sous agitation pendant toute la durée de l'imprégnation (2 heures).

Les pré-imprégnés du lot L1 (qui correspondent aux pré-imprégnés de l'état de la technique et servent de référence) mesurent environ 0,13 mm x 6,35 mm de section transversale tandis que les pré-imprégnés des lots L2 à L5 mesurent environ 0,15 mm x 50 mm de section transversale.

### Préparation des préformes et consolidation en étuve :

Des préformes de 4 plis, mesurant 200 mm sur 200 mm, sont préparées par drapage manuel, en réalisant entre les fibres des points de liaison au moyen d'un fer à souder (température de panne de 450°C) à partir des lots L1 à L5 de pré-imprégnés. Le drapage est réalisé avec une symétrie miroir selon une séquence 90°/0°/0°/90°.

Ces préformes sont consolidées en étuve, sous vessie (pression : 850 mbars), en appliquant le cycle de consolidation suivant :
- mise sous vide de l'étuve ;
- montée en température de 20°C à 300°C à raison de 2°C/minute ;
- palier de dégazage à 300°C pendant 20 minutes ;
- montée en température de 300°C à 395°C à raison de 2°C/minute ;
- palier de consolidation à 395°C pendant 25 minutes ; et
- descente en température jusqu'à 20°C à raison de 2°C/minute.

### Appréciation de la consolidation des composites par CND :

La qualité de consolidation des matériaux obtenus ci-avant est appréciée par un contrôle non destructif aux ultrasons par immersion selon la méthode par double transmission. Ce type de contrôle, qui est bien connu en soi, permet d'établir une cartographie des défauts et, notamment de la porosité résiduelle, que présente un matériau après sa fabrication sans nuire à l'intégrité de la structure de ce matériau.

### Résultats :

Les résultats sont illustrés sur les figures 2A à 2E qui montrent les cartographies ultrasonores obtenues pour les différents composites : la figure 2A correspond à un composite préparé à partir d'un pré-imprégné du lot L1 ; les figures 2B et 2C correspondent à deux composites respectivement préparés à partir des pré-imprégnés des lots L2 et L3, tandis que les figures 2D et 2E correspondent à deux composites respectivement préparés à partir des pré-imprégnés des lots L4 et L5.

Sur ces cartographies, qui sont originellement en couleurs mais qui sont présentées en annexe en dégradés de gris, le ton de gris le plus clair, référencé f1, correspond à une absence de propagation de l'onde ultrasonore dans le composite, ce qui est le signe d'une mauvaise consolidation du composite. Le ton de gris le plus foncé, référencé f3, correspond à une atténuation de l'onde ultrasonore de l'ordre de 90% et à la présence de porosités dans le composite, ce qui est également le signe d'une mauvaise consolidation du composite. Par contre, le ton de gris intermédiaire, référencé f2, correspond à une atténuation située entre 20% et 30% de l'onde ultrasonore dans le composite et traduit, lui, une bonne consolidation du composite.

Il est à noter que le ton de gris f2 correspond typiquement à des matériaux dont la porosité résiduelle est inférieure à 1%, c'est-à-dire à des matériaux répondant aux exigences aéronautiques et spatiales.

Comme le montre la figure 2A, la consolidation du composite préparé à partir du pré-imprégné du lot L1 servant de référence est de très mauvaise qualité puisque la cartographie obtenue pour ce composite est majoritairement occupée par une zone au ton de gris f1 (absence de propagation de l'onde ultrasonore).

La consolidation du composite préparé à partir du pré-imprégné du lot L5 (lot du bain d'imprégnation comprenant le monolaurate de sorbitane polyoxoéthylène comme agent tensioactif) est également de très mauvaise qualité puisque la cartographie obtenue est essentiellement constituée d'une juxtaposition de zones aux tons de gris f1 et f3 (figure 2E).

La consolidation du composite préparé à partir du pré-imprégné du lot L4 (lot du bain d'imprégnation comprenant l'alcool stéarylique éthoxylé 20 fois comme agent tensioactif) est de meilleure qualité que celle des composites précédents mais des zones irrégulières subsistent (figure 2D).

Par contre, la consolidation des composites préparés à partir des pré-imprégnés des lots L2 et L3, conformes à l'invention, est, elle, très satisfaisante (figures 2B et 2C).

Ces résultats confirment que l'utilisation d'un alcool stéarylique éthoxylé 100 fois, comme agent tensioactif dans un bain d'imprégnation aqueux pour fibres de renfort, permet d'obtenir des pré-imprégnés à matrice thermoplastique qui conduisent à une consolidation très satisfaisante des matériaux composites obtenus à partir de ces pré-imprégnés, sans mise sous pression extérieure (la pression extérieure étant simplement la pression atmosphérique), ce qui n'est le cas ni de l'utilisation de l'alcool cétéarylique éthoxylé 25 fois utilisé dans l'état de la technique ni même de celle d'un alcool stéarylique éthoxylé 20 fois au lieu de 100.

### RÉFÉRENCES CITÉES

**[1]** US n° 5,888,580
**[2]** WO 93/01045

## Revendications

1. Bain d'imprégnation de fibres de renfort pour la fabrication d'un pré-imprégné à matrice thermoplastique, comprenant au moins un polymère thermoplastique, un agent tensioactif et de l'eau, **caractérisé en ce que** l'agent tensioactif est un alcool stéarylique éthoxylé de formule : HO-(CH₂-CH₂-O)ₙ-CH₂-(CH₂)₁₆-CH₃ dans laquelle n vaut 100.

2. Bain d'imprégnation selon la revendication 1, **caractérisé en ce qu'**il comprend l'agent tensioactif dans une proportion massique de 0,25% à 5% et, mieux encore, de 0,50% à 1,5% par rapport au polymère thermoplastique.

3. Bain d'imprégnation selon la revendication 1 ou la revendication 2, **caractérisé en ce qu'**il comprend le polymère thermoplastique dans une proportion massique allant de 10% à 50% et, mieux encore, de 25% à 35% par rapport à l'eau.

4. Bain d'imprégnation selon l'une quelconque des revendications 1 à 3, **caractérisé en ce que** le polymère thermoplastique est choisi parmi les polyaryléthercétones, les polyéthylèneimines, les polyoléfines, les polyamides, les polyimides, les polyuréthannes thermoplastiques, les poly(sulfure de phénylène), les poly(téréphtalate d'éthylène), les poly(téréphtalate de butylène), les polysulfones, les polycarbonates, les poly(chlorure de vinyle) et les poly(alcool vinylique).

5. Bain d'imprégnation selon la revendication 4, **caractérisé en ce que** le polymère thermoplastique est une polyétheréthercétone.

6. Bain d'imprégnation selon l'une quelconque des revendications 1 à 5, **caractérisé en ce qu'**il comprend le polymère thermoplastique sous la forme de particules dont le diamètre médian (D50) en nombre est d'au plus 50 micromètres.

7. Procédé d'imprégnation de fibres de renfort pour la fabrication d'un pré-imprégné à matrice thermoplastique, comprenant l'immersion des fibres de renfort dans un bain d'imprégnation tel que défini dans l'une quelconque des revendications 1 à 6.

8. Procédé d'imprégnation selon la revendication 7, **caractérisé en ce que** les fibres de renfort sont choisies parmi les fibres de verre, les fibres de carbone, les fibres de graphite, les fibres de silice, les fibres métalliques, les fibres céramiques, les fibres organiques de synthèse et les fibres organiques naturelles.

9. Procédé d'imprégnation selon la revendication 7 ou la revendication 8, **caractérisé en ce que** les fibres de renfort sont des fibres de carbone et le bain d'imprégnation comprend un taux massique de fibres de renfort allant de 35% à 75% et, mieux encore, de 57% à 72% rapporté à la masse totale des fibres de renfort et du polymère thermoplastique.

10. Procédé d'imprégnation selon la revendication 7 ou la revendication 8, **caractérisé en ce que** les fibres de renfort sont des fibres de verre ou de silice et le bain d'imprégnation comprend un taux massique de fibres de renfort allant de 45% à 82% et, mieux encore, de 66% à 78% rapporté à la masse totale des fibres de renfort et du polymère thermoplastique.

11. Procédé de fabrication d'un pré-imprégné à matrice thermoplastique, qui est **caractérisé en ce qu'**il comprend une étape d'imprégnation de fibres de renfort par un procédé tel que défini dans l'une quelconque des revendications 7 à 10.

12. Procédé de fabrication d'une pièce en un matériau composite à matrice thermoplastique, qui est **caractérisé en ce qu'**il comprend une étape de fabrication d'un pré-imprégné à matrice thermoplastique par un procédé tel que défini dans la revendication 11.

## Patentansprüche

1. Imprägnierbad für Verstärkungsfasern zum Herstellen eines Prepregs mit thermoplastischer Matrix, enthaltend zumindest ein thermoplastisches Polymer, ein Tensid und Wasser,
**dadurch gekennzeichnet, dass**
das Tensid ein ethoxylierter Stearylalkohol der Formel
HO-(CH₂-CH₂-O)ₙ-CH₂-(CH₂)₁₆-CH₃
ist, wobei n 100 beträgt.

2. Imprägnierbad nach Anspruch 1,
**dadurch gekennzeichnet, dass**
es Tensid in einem Massenanteil von 0,25% bis 5%, noch besser von 0,50% bis 1,5%, bezogen auf das thermoplastische Polymer, enthält.

3. Imprägnierbad nach Anspruch 1 oder Anspruch 2,
**dadurch gekennzeichnet, dass**
es thermoplastisches Polymer in einem Massenanteil von 10% bis 50%, noch besser von 25% bis 35%, bezogen auf Wasser enthält.

4. Imprägnierbad nach einem der Ansprüche 1 bis 3,
**dadurch gekennzeichnet, dass**
das thermoplastische Polymer ausgewählt ist aus Polyaryletherketonen, Polyethyleniminen, Polyolefinen, Polyamiden, Polyimiden, thermoplastischen Polyurethanen, Polyphenylensulfiden, Polyethylenterephthalaten, Polybutylenterephthalaten, Polysulfonen, Polycarbonaten, Polyvinylchloriden und Polyvinylalkoholen.

5. Imprägnierbad nach Anspruch 4,
**dadurch gekennzeichnet, dass**
das thermoplastische Polymer ein Polyetheretherketon ist.

6. Imprägnierbad nach einem der Ansprüche 1 bis 5,
**dadurch gekennzeichnet, dass**
es thermoplastisches Polymer in Form von Partikeln mit einem zahlenmäßigen mittleren Durchmesser (D50) von mindestens 50 Mikrometern enthält.

7. Verfahren zum Imprägnieren von Verstärkungsfasern zum Herstellen eines Prepregs mit thermoplastischer Matrix, umfassend das Eintauchen der Verstärkungsfasern in ein Imprägnierbad nach einem der Ansprüche 1 bis 6.

8. Imprägnierverfahren nach Anspruch 7,
**dadurch gekennzeichnet, dass**
die Verstärkungsfasern ausgewählt sind aus Glasfasern, Kohlenstofffasern, Graphitfasern, Kieselsäurefasern, Metallfasern, Keramikfasern, synthetischen organischen Fasern und natürlichen organischen Fasern.

9. Imprägnierverfahren nach Anspruch 7 oder Anspruch 8,
**dadurch gekennzeichnet, dass**
die Verstärkungsfasern Kohlenstofffasern sind und das Imprägnierbad einen Massenanteil an Verstärkungsfasern im Bereich von 35% bis 75% und noch besser von 57% bis 72%, bezogen auf die Gesamtmasse der Verstärkungsfasern und des thermoplastischen Polymers, enthält.

10. Imprägnierverfahren nach Anspruch 7 oder Anspruch 8,
**dadurch gekennzeichnet, dass**
die Verstärkungsfasern Glas- oder Kieselsäurefasern sind und das Imprägnierbad einen Massenanteil an Verstärkungsfasern im Bereich von 45% bis 82% und noch besser von 66% bis 78%, bezogen auf die Gesamtmasse der Verstärkungsfasern und des thermoplastischen Polymers, enthält.

11. Verfahren zum Herstellen eines Prepregs mit thermoplastischer Matrix,
**dadurch gekennzeichnet, dass**
es einen Schritt des Imprägnierens von Verstärkungsfasern mit einem Verfahren nach einem der Ansprüche 7 bis 10 umfasst.

12. Verfahren zum Herstellen eines Teils aus einem Verbundmaterial mit thermoplastischer Matrix,
**dadurch gekennzeichnet, dass**
es einen Schritt des Herstellens eines Prepregs mit thermoplastischer Matrix mit einem Verfahren nach Anspruch 11 umfasst.

## Claims

1. Impregnation bath for reinforcement fibres for the manufacture of a prepreg having a thermoplastic matrix, comprising at least one thermoplastic polymer, a surfactant and water, **characterised in that** the surfactant is an ethoxylated stearyl alcohol of formula: HO-(CH₂-CH₂-O)ₙ-CH₂-(CH₂)₁₆-CH₃ wherein n is 100.

2. Impregnation bath according to claim 1, **characterised in that** it comprises the surfactant in a proportion by weight of 0.25% to 5% and, better still, 0.50% to 1.5% with respect to the thermoplastic polymer.

3. Impregnation bath according to claim 1 or claim 2, **characterised in that** it comprises the thermoplastic polymer in a proportion by weight ranging from 10% to 50% and, better still, from 25% to 35% with respect to water.

4. Impregnation bath according to any of claims 1 to 3, **characterised in that** the thermoplastic polymer is selected from polyaryletherketones, polyethyleneimines, polyolefins, polyamides, polyimides, thermoplastic polyurethanes, polyphenylene sulphides, polyethylene terephthalates, polybutylene terephthalates, polysulphones, polycarbonates, polyvinyl chlorides and polyvinyl alcohols.

5. Impregnation bath according to claim 4, **characterised in that** the thermoplastic polymer is a polyetheretherketone.

6. Impregnation bath according to any of claims 1 to 5, **characterised in that** it comprises the thermoplastic polymer in the form of particles whose the number median diameter (D50) is at the most 50 micrometres.

7. Method for impregnating reinforcement fibres for the manufacture of a prepreg having a thermoplastic matrix, comprising the immersion of the reinforcement fibres in an impregnation bath as defined in any of claims 1 to 6.

8. Impregnation method according to claim 7, **characterised in that** the reinforcement fibres are selected from glass fibres, carbon fibres, graphite fibres, silica fibres, metal fibres, ceramic fibres, synthetic organic fibres and natural organic fibres.

9. Impregnation method according to claim 7 or claim 8, **characterised in that** the reinforcement fibres are carbon fibres and the impregnation bath comprises a weight content of reinforcement fibres ranging from 35% to 75% and, better still, 57% to 72% with respect to the total weight of the reinforcement fibres and the thermoplastic polymer.

10. Impregnation method according to claim 7 or claim 8, **characterised in that** the reinforcement fibres are glass or silica fibres and the impregnation bath comprises a weight content of reinforcement fibres ranging from 45% to 82% and, better still, 66% to 78% with respect to the total weight of the reinforcement fibres and the thermoplastic polymer.

11. Method for manufacturing a prepreg having a thermoplastic matrix, which is **characterised in that** it comprises a step of impregnating reinforcement fibres by a method as defined in any of claims 7 to 10.

12. Method for manufacturing a part made of a composite material having a thermoplastic matrix, which is **characterised in that** it comprises a step of manufacturing a prepreg having a thermoplastic matrix by a method as defined in claim 11.
